# EUROPÄISCHE PATENTSCHRIFT

(11) **EP 0 835 996 B1**
(45) Veröffentlichungstag und Bekanntmachung des Hinweises auf die Patenterteilung: **10.04.2002**
(21) Anmeldenummer: 97810692.0
(22) Anmeldetag: 22.09.1997
(51) Int. Cl.: F02C 6/00, F01D 9/04

(54) **Gasturbine mit einer sequentiellen Verbrennung**
Gas turbine with sequential combustion
Turbine à gaz avec combustion séquentielle

(30) Priorität: 10.10.1996 DE 19641725
(43) Veröffentlichungstag der Anmeldung: 15.04.1998
(73) Patentinhaber: ALSTOM (Schweiz) AG, 5400 Baden (CH)
(72) Erfinder: Marmilic, Robert, 5415 Nussbaumen (CH); Schulte-Werning, Burkhard, Dr., 80805 München (DE)

(56) Entgegenhaltungen:
- EP-A- 0 590 297
- EP-A- 0 620 362
- DE-A- 19 507 763
- FR-A- 2 071 665
- GB-A- 2 293 415
- US-A- 5 557 918
- US-A- 5 647 200

## Beschreibung

### Technisches Gebiet

Die vorliegende Erfindung betrifft eine Gasturbine gemäss Oberbegriff des Anspruchs 1.

### Stand der Technik

Bei Gasturbinen mit einer sequentieller Verbrennung, wie dies aus EP-0 620 362 A1 bekanntgeworden ist, wird ein Brennstoff/Luft-Gemisch in einer ersten Brennkammer verbrannt und anschliessend nach einer Entspannung in einer ersten Turbine einer zweiten Verbrennungsstufe zugeführt.

Das Geschwindigkeitsprofil der das Laufrad der ersten Turbine verlassende Strömung ist derart stark verdrallt, dass diese gleichgerichtet werden muss, um eine optimale Anströmung der nachfolgenden zur zweiten Brennkammer gehörenden Mischelemente zu gewährleisten, damit eine möglichst innige Vermischung dieser teilentspannten Heissgase mit dem in die zweiten Brennkammer eingegebenen Brennstoff erreicht wird, unter Zugrundelegung der Tatsache, dass die zweite Brennkammer nach einem Selbstzündungsprozess betrieben wird, so dass dort auf eine optimale Vermischung zur Maximierung des Wirkungsgrades und Minimierung der Schadstoff-Emissionen besonders Gewicht gelegt werden muss.

Die Güte der innigen Vermischung des in die zweite Brennkammer eingedüsten Brennstoffes ist grundsätzlich von der Art des durch die Mischelemente hervorgerufenen Dralls an der Strömung der teilentspannten Heissgase abhängig, d.h., die Mischelemente werden so ausgelegt, dass daraus jene Drallströmung bereitgestellt werden kann, welche die besten Voraussetzungen für eine optimale Vermischung und Verbrennung bietet. Dies setzt allerdings voraus, dass diese Mischelemente über den ganzen Strömungsquerschnitt mit einer neutralen Strömung angeströmt werden, die indessen aus genannten Gründen stromab der ersten Turbine nicht vorhanden ist.

### Darstellung der Erfindung

Hier will die Erfindung Abhilfe schaffen. Der Erfindung, wie sie in den Ansprüchen gekennzeichnet ist, liegt die Aufgabe zugrunde, bei einer Vorrichtung der eingangs genannten Art stromab der ersten Turbine Mittel vorzusehen, welche die Anströmung der nachgeschalteten Mischelemente mit einer neutralen Strömung gewährleisten.

Ein wesentlicher Vorteil der Erfindung ist darin zu sehen, dass diese Mittel so ausgelegt werden, dass sie einen Gleichrichteffekt der ganzen Strömung der in der ersten Turbine teilentspannten Heissgase hervorrufen. Sonach sind diese Mittel zwischen dem Turbinenlaufrad und den nachgeschalteten als Wirbelerzeuger ausgelegten Mischelementen der zweiten Brennkammer anzuordnen, damit bestimmungsgemäss daraus eine neutrale Strömung entsteht, welche die einzelnen Mischelemente dann in gleicher Quantität und Qualität beaufschlägt.

Da die teilentspannten Heissgase aus der ersten Turbine eine Hochgeschwindigkeitsströmung bilden, und dies zu einer hohen Wärmebelastung gegenüber den Mitteln zur Bildung ebendieser neutralen Strömung führt, ist ein weiterer wesentlicher Vorteil der Erfindung darin zu sehen, dass eine hocheffiziente Kühltechnik bereitgestellt wird, welche mit der Kühlungstechnik und Kühlungskonfiguration der zweiten Brennkammer, wie sie in der Druckschrift EP-0 669 500 A1 vorgeschlagen ist, wobei diese Druckschrift integrierender Bestandteil vorliegender Beschreibung ist, harmonisiert, ohne jedoch den Gasturbinenzyklus in Bezug auf Leistung und Wirkungsgrad auch nur minimal zu beeinträchtigen.

Vorteilhafte und zweckmässige Weiterbildungen der erfindungsgemässen Aufgabenlösung sind in den weiteren abhängigen Ansprüchen gekennzeichnet.

Im folgenden werden anhand der Zeichnungen Ausführungsbeispiele der Erfindung näher erläutert. Alle für das unmittelbare Verständnis der Erfindung nicht erforderlichen Elemente sind fortgelassen worden. Gleiche Elemente sind in den verschiedenen Figuren mit den gleichen Bezugszeichen versehen. Die Strömungsrichtung der Medien ist mit Pfeilen angegeben.

### Kurze Beschreibung der Zeichnungen

Es zeigt:
- Fig. 1: einen Abschnitt des ringförmigen Uebergangskanals stromab der ersten Turbine und stromauf der zweiten Brennkammer,
- Fig. 2: eine im Uebergangskanal gemäss Fig. 1 eingebaute Leitschaufel mit entsprechender Kühlung,
- Fig. 3: eine weitere Ausführungsform des ringförmigen Uebergangskanal und
- Fig. 4: eine im Uebergangskanal gemäss Fig. 3 eingebaute Leitschaufel mit entsprechender Kühlung.

### Wege zur Ausführung der Erfindung, gewerbliche Verwendbarkeit

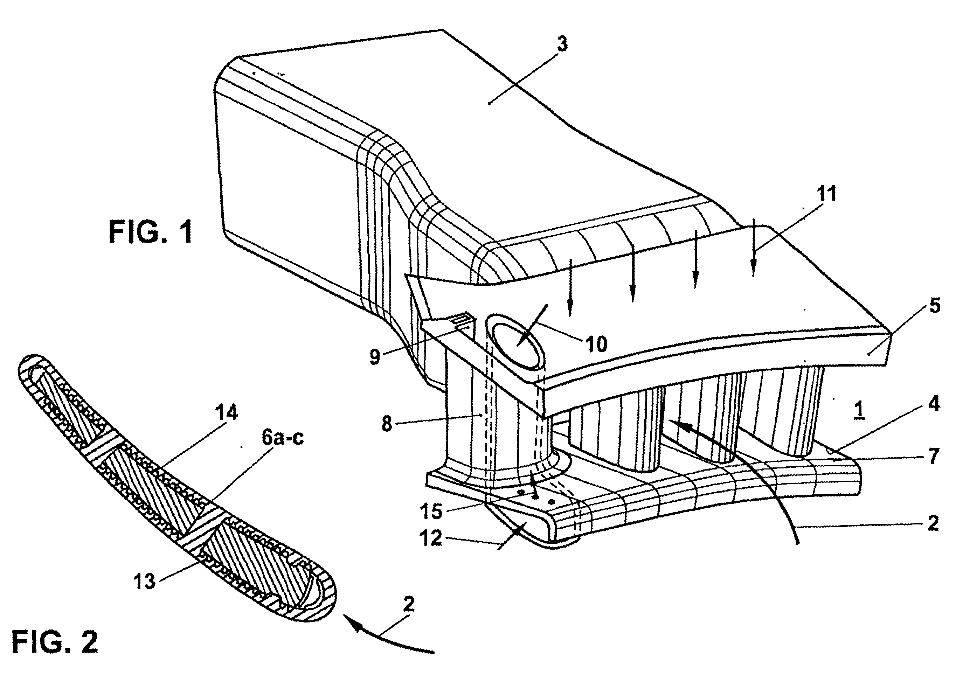

Fig. 1 zeigt einen ringförmigen Uebergangskanal 1, welcher stromab einer nicht näher dargestellten Turbine und stromauf einer ebenfalls nicht näher gezeigten zweiten Brennkammer angeordnet wird. Die hier nicht näher gezeigten Aggregate einer sequentiell befeuerten Gasturbine sind indessen in der Druckschrift EP-0 620 362 A1 ersichtlich. Der hier dargestellte ringförmige Uebergangskanal 1, der von den teilentspannten Heissgasen 2 aus der ersten Turbine durchströmt wird, geht anschliessend in einen nachgeordneten Diffusor 3 über, bevor die Mischelemente in der zweiten Brennkammer aus dieser Strömung eine ursächlich mit der Konfiguration dieser Mischelemente im Zusammenhang stehende Drallströmung induzieren. Der Uebergangskanal 1 selbst besteht aus einer inneren Plattform 4 und einer äusseren Plattform 5, welche die Fortsetzung der Heissgasführung aus der ersten Turbine zur zweiten Brennkammer bilden. Wie in EP-0 620 362 A1 dargestellt ist; wird die zweite Brennkammer mit einer Reihe von Brennstoffdüsen betrieben, welche in Umfangsrichtung dieser ringförmiger Führung und stromab der dort gezeigten Mischelemente angeordnet sind. Zu jeder dieser Brennstoffdüse, resp. zu den entsprechenden Mischelementen, welche in Wirkverbindung mit der Brennstoffdüse stehen, sind vorliegend drei Schaufeln 6a-c zugeordnet, welche im Uebergangskanal 1 versetzt zu dessen Vorderkante 7 angeordnet sind. Die innere und äussere Plattform 4, 5 sind in Umfangsrichtung durch eine Anzahl Streben 8 zueinander beabstandet und miteinander verbunden, wobei sich diese Streben 8 in der Ebene der intermediären Lücke zwischen den einzelnen Mischelementen resp. Brennstoffdüsen in der nachgeschalteten zweiten Brennkammer befinden, womit sie im ringförmigen Uebergangskanal 1 einzelne Teildurchströmungskanäle bilden, welche ihrerseits jeweils von den drei genannten Schaufeln 6a-c unterteilt sind. Demnach nehmen diese Streben 8 an der Glättung der verdrallten Strömung aus der ersten Turbine grundsätzlich nicht teil. Sie dienen vielmehr zur Aufnahme von mechanischen Verbindungselementen 9 der inneren und äusseren Tragstruktur des Uebergangskanals 1 sowie zur Durchführung von Luftströmen 10, die zur Kühlung einerseits der verschiedenen thermisch belasteten Aggregate der Gasturbine, andererseits zur Kühlung der Bestandteile des ringförmigen Uebergangskanals 1 benötigt werden. Hier ist insbesondere auf die Kühlung der inneren Wand der zweiten Brennkammer, des Rotors, des Laufrades der zweiten Turbine hinzuweisen. Die Schaufeln 6a-c sowie die übrigen Schaufeln des ringförmigen Uebergangskanals 1, welche die Nachleitreihe bilden, sind 2-3 Sehnenlängen stromab des Laufrades der ersten Turbine angeordnet, womit auch hier die Möglichkeit besteht, diese Zwischenstrecke diffusionsmässig oder diffusionsartig auszubilden. Durch die Massnahme, die genannte Zwischenstrecke als Diffusionspassage auszubilden, kann die notwendige Schaufelzahl erheblich verringert und die einzelnen Schaufeln 6a-c der Nachleitreihe können in Umfangsrichtung breiter ausgebildet werden. Beide Vorkehrungen führen sowohl an der Vorderkante 7 als auch entlang der beiden Innenwände der Plattformen 4, 5 zu einer niedrigen Wärmebelastung der Schaufeln 6a-c, ohne dass der Gleichrichteffekt beeinträchtigt wird. Damit fällt der Kühlluftaufwand gegenüber einer üblichen zum Stand der Technik gehörenden Nachleitschaufelreihe deutlich geringer aus. Die Schaufeln 6a-c sind so ausgelegt, dass sie ein Gleichrichteffekt auf die Drallströmung induzieren. Ziel ist hier, dass die Mischelemente in der zweiten Brennkammer auf alle Fälle mit einer neutralen Strömung angeströmt werden. Die Qualität der Wirbelerzeugung für die dann nachfolgende Brennstoffeindüsung soll allein durch die Konfiguration der Mischelemente ausgelöst werden. Dies ist insofern unabdingbar, als eine gleichmässige optimale Vermischung des dazugegebenen Brennstoffes stattfindet muss, damit die durch Selbstzündung ausgelöste Verbrennung in der zweiten Brennkammer über den ganzen Strömungsquerschnitt gleichmässig erfolgt, also ohne lokale Temperaturspitzen vonstatten geht, welche ursächlich für einen Anstieg der Schadstoff-Emissionen, insbesondere der NOx-Werte dafür verantwortlich sind.

Aus Fig. 1 ist des weiteren ersichtlich, dass die Nachtleitreihe 6a-c und die Streben 8 als ein Bauteil ausgeführt werden, und wie bereits mehrfach erwähnt zwischen erster Turbine und zweiter Brennkammer eingehängt wird. Etwa 85% der vom Verdichter für die Kühlung der gesamten Mittelsektion der Gasturbine zur Verfügung gestellten Luftmassenstrom kühlt zuerst konvektiv die Wände der ersten Brennkammer und gelangt anschliessend in ein nicht näher gezeigtes Plenum vor der effusiongekühlten zweiten Brennkammer. Die übrigen 15% des abgezweigten Luftmassenstromes werden direkt vom Verdichter in ein kleineres zur Nachleitreihenkonfiguration gehörendes Plenum eingeleitet, das in Fig. 1 nicht näheres gezeigt ist. Von dort passiert diese Luft die Prallkühlung 11 der äusseren Plattformen 4, gelangt dann in die radial geführten Konvektivkanäle der Nachleitschaufeln 6a-c, im Sinne einer Querströmkühlung gegenüber der Richtung der teilentspannten Heissgase 2, und tritt anschliessend in ein zur inneren Plattform 4 gehörendes Effusionsplenum 12 über, wobei diese innere Plattform 4 ebenfalls durch Effusion 15 gekühlt wird. Der durch die Streben 8 strömende Luftmassenstrom 10 gelangt anschliessend ebenfalls in das genannte Effusionsplenum 12. Vorteilhaft ist bei dieser Auslegung die Tatsache, dass trotz vorhergehender Aufteilung des zu Kühlzwecken bereitgestellten Luftmassenstromes für die Effusionskühlung in der zweiten Brennkammer auf den gesamten Luftstrom zurückgreifen kann.

Als treibender Druckgradient für die Kühlung der Nachleitreihe 6a-c steht hier die Differenz zwischen dem Druck im ersten Plenum des ringförmigen Uebergangskanals 1 und dem weiteren Effusionsplenum 12 zur Verfügung. Diese Differenz wird hauptsächlich durch die Kühlung der Wand der ersten Brennkammer bestimmt.

Fig. 2 zeigt die bereits angesprochene Konvektivkühlung der zur Nachleitreihe gehörenden Schaufeln 6a-c, wobei die Schaufeln 6a-c inwendig eine Reihe von radialverlaufenden und nebeneinander angeordneten Kanälen 13 aufweisen, durch welche die Kühlluft bezogen auf die Richtung der teilentspannten Heissgase 2 aus der ersten Turbine eine Querströmung bildet. Die Schaufeln 6a-c sind in verschiedene Abteile unterteilt, wobei die Kanäle 13 aus Nuten gebildet sind, deren strömungstechnische Führung durch Einlagen 14 bewerkstelligt wird.

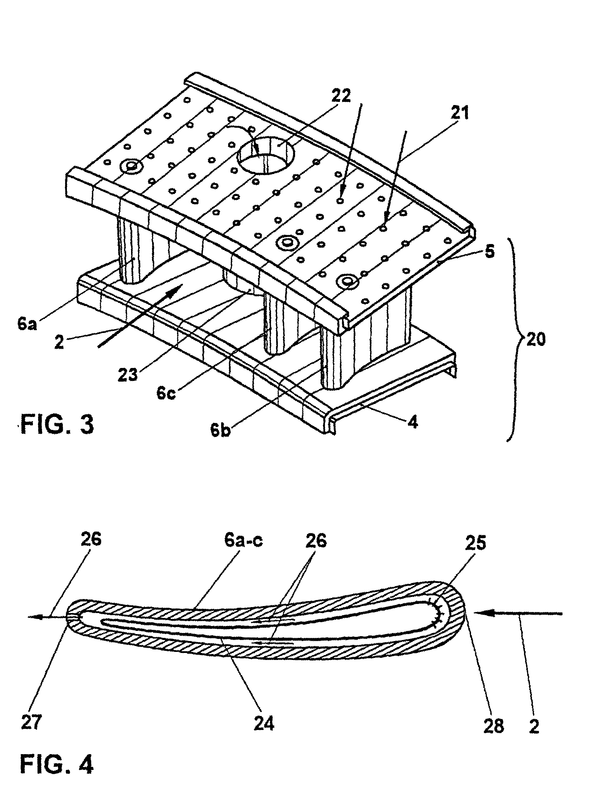

Fig. 3 zeigt eine weitere Ausführung eines Uebergangskanals 20, welcher ebenfalls im Sinne einer Nachleitreihenkonfiguration aufgebaut ist, wobei dieser Uebergangskanal 20 ein autonomer Einsatzteil ist, der zwischenräumlich stromab der ersten Turbine und stromauf der zweiten Brennkammer eingelassen wird. Dies erlaubt, die Kühlung der zweiten Brennkammer und die hier gezeigte Nachleitreihe individuell und optimal zu gestalten, dergestalt, dass insbesondere das Verhalten der Kühlung in der gesamten Mittelsektion der Gasturbine unter GT-spezifischen Teillastbedingungen verbessert wird. Diese Massnahme gewinnt vor allem im Hinblick auf weitere Leistungssteigerung der Gasturbinen mit sequentieller Verbrennung an Bedeutung. Die für die Kühlung der Nachleitreihenpartie vorgesehene Kühlluft strömt zunächst ebenfalls in ein nicht näher gezeigtes Plenum, und von hier aus wirkt sie als Prallkühlung 21 auf die äussere Plattform 5, um dann über eine Oeffnung 22 in den radialen Konvektivkanal der Strebenvorderkante 23 zu strömen, womit eine Querstromkühlung bezogen auf den Strom der teilentspannten Heissgase 2 entsteht.

Anschliessend gelangt diese Kühlluft in ein Plenum unter der inneren Plattform 4, analog wie dies in Fig. 1 bereit zur Darstellung gelangt ist. Dort passiert ein geringer Teil, ca. 10-30%, dieser in den Innenbereich transferierten Luft die Prallkühlung der inneren Plattform 4, und sie gelangt dann in die jeweiligen radialen Zuspeisekanäle der drei hier gezeigten Schaufeln 6a-c der Nachleitreihe, welche ebenfalls im Sinne der Ausführungen unter Fig. 1 die genannten Gleichrichteffekte auslöst. Die Art der Kühlung innerhalb der Schaufeln 6a-c geht aus Fig. 4 hervor.

Fig. 4 zeigt die spezifische Kühlung der Schaufeln 6a-c der Nachleitreihe. Die Kühlluft, die gemäss Beschreibung unter Fig. 3 in die jeweiligen radialen Zuspeisekanäle 24 der Schaufeln gelangt, kühlt zunächst über eine Prallplatte 25 die jeweilige Vorderkante 28 und wird dann konvektiv kühlend entlang der Innenwand 26 in Gleichstromrichtung zu den teilentspannten Heissgase 2 aus der ersten Turbine geführt, um dann an der Schaufelhinterkante ins Heissgas eingeblasen zu werden. Als treibender Druckgradient der Kühlung für die Nachleitreihe steht jetzt die Differenz zwischen dem Druck im Plenum der Mittelsektion und dem statischen Druck an der Schaufelhinterkante 27 zur Verfügung.

### Bezugszeichenliste

- 1: Ringförmiger Ueberganskanal
- 2: Teilentspannte Heissgase
- 3: Nachgeordneter Diffusor
- 4: Innere Plattform
- 5: Aeussere Plattform
- 6a-c: Schaufeln, Nachleitreihe
- 7: Vorderkante
- 8: Streben
- 9: Mechanische Verbindungselemente der Streben
- 10: Luftströme
- 11: Prallkühlung
- 12: Effusionsplenum
- 13: Kanäle
- 14: Einlagen
- 15: Effusionskühlung
- 20: ringförmiger Uebergangskanal als Einsatzteil
- 21: Prallkühlung
- 22: Oeffnung
- 23: Strebenvorderkante
- 24: Zuspeisekanäle
- 25: Prallplatte
- 26: Innenwand
- 27: Schaufelhinterkante
- 28: Schaufelvorderkante

## Patentansprüche

1. Gasturbine mit einer sequentiellen Verbrennung, im wesentlichen bestehend aus einer Verdichtereinheit, einer ersten Brennkammer, einer ersten Turbine, einer zweiten Brennkammer und einer zweiten Turbine, wobei die zweite Brennkammer Mischelemente aufweist, welche in Wirkverbindung mit einer nachgeordneten Brennstoffeindüsung eine Drallströmung induzieren, **dadurch gekennzeichnet, dass** intermediär zwischen der ersten Turbine und der zweiten Brennkammer eine in einem Uebergangskanal (1) wirkende Nachleitreihe (6a-c) angeordnet ist, deren Schaufeln eine gleichgerichlate Strömung für die Beaufschlagung der nachgeschalteten Mischelemente bewerkstelligen.

2. Gasturbine nach Anspruch 1, **dadurch gekennzeichnet, dass** der Uebergangskanal (1) von ringförmiger Ausgestaltung ist, dass je eine durch Streben (8) abgegrenzte Anzahl Schaufeln (6a-c) einen Durchströmungskanal bilden, und dass dieser Durchströmungskanal in der Strömungsebene mindestens eines nachgeschalteten Mischelementes ausgerichtet ist.

3. Gasturbine nach Anspruch 2, **dadurch gekennzeichnet, dass** der ringförmige Uebergangskanal (1) im wesentlichen aus einer inneren Plattform (4) und einer äusseren Plattform (5) besteht, und dass die Plattformen (4, 5) jeweils prallgekühlt (11) und/oder effusionsgekühlt (15) sind.

4. Gasturbine nach Anspruch 1, **dadurch gekennzeichnet, dass** ein Diffusor (3) der Nachleitreihe (6a-c) nachgeschaltet ist.

5. Gasturbine nach Anspruch 1, **dadurch gekennzeichnet, dass** die Schaufeln der Nachleitreihe (6a-c) jeweils eine Konvektivkühlung und/oder Prallkühlung aufweisen.

## Claims

1. Gas turbine having sequential combustion, essentially comprising a compressor unit, a first combustion chamber, a first turbine, a second combustion chamber and a second turbine, the second combustion chamber having mixing elements which induce a swirl flow in interaction with a downstream fuel injection, **characterized in that** a secondary guide row (6a-c) acting in a transition duct (1) is arranged intermediately between the first turbine and the second combustion chamber, the blades of which secondary guide row (6a-c) effect a rectified flow for the admission to the downstream mixing elements.

2. Gas turbine according to Claim 1, **characterized in that** the transition duct (1) is of annular design, **in that** in each case a number of blades (6a-c) delimited by struts (8) form a throughflow duct, and **in that** this throughflow duct is oriented in the flow plane of at least one downstream mixing element.

3. Gas turbine according to Claim 2, **characterized in that** the annular transition duct (1) essentially comprises an inner platform (4) and an outer platform (5), and **in that** the platforms (4, 5) are in each case impact-cooled (11) and/or effusion-cooled (15).

4. Gas turbine according to Claim 1, **characterized in that** a diffuser (3) is arranged downstream of the secondary guide row (6a-c).

5. Gas turbine according to Claim 1, **characterized in that** the blades of the secondary guide row (6a-c) in each case have convective cooling and/or impact cooling.

## Revendications

1. Turbine à gaz à combustion séquentielle, essentiellement constituée d'une unité de compresseur, d'une première chambre de combustion, d'une première turbine, d'une deuxième chambre de combustion et d'une deuxième turbine, la deuxième chambre de combustion présentant des éléments de mélange qui induisent un écoulement torsadé sous l'action combinée d'une injection de combustible disposée en aval, **caractérisée en ce qu'**en position intermédiaire entre la première turbine et la deuxième chambre de combustion est disposée une série de guides secondaires (6a-c) qui agit dans un canal de transfert (1) et dont les pales ont pour effet un écoulement redressé pour l'alimentation des éléments de mélange situés en aval.

2. Turbine à gaz selon la revendication 1, **caractérisée en ce que** le canal de transfert (1) présente une configuration de forme annulaire, **en ce que** chaque fois un nombre de pales (6a-c) défini par des entretoises (8) forme un canal d'écoulement, et **en ce que** ce canal d'écoulement est orienté dans le plan de l'écoulement d'au moins un élément de mélange situé en aval.

3. Turbine à gaz selon la revendication 2, **caractérisée en ce que** le canal de transfert (1) de forme annulaire est essentiellement constitué d'une plate-forme intérieure (4) et d'une plate-forme extérieure (5), et **en ce que** les plates-formes (4, 5) sont chacune refroidies par percussion (11) et/ou par effusion (15).

4. Turbine à gaz selon la revendication 1, **caractérisée en ce qu'**un diffuseur (3) est placé en aval de la série de guides secondaires (6a-c).

5. Turbine à gaz selon la revendication 1, **caractérisée en ce que** les pales de la série de guides secondaires (6a-c) présentent chacune un refroidissement par convection et/ou un refroidissement par percussion.
